# EUROPEAN PATENT APPLICATION

(11) **EP 4 272 555 A1**
(43) Date of publication of application: **08.11.2023**
(21) Application number: 23171295.1
(22) Date of filing: 03.05.2023
(51) Int. Cl.: A01N 25/02, A01N 25/34, A01P 1/00, A01N 33/04

(54) **DIAMINES FOR INTERFERING WITH FUNCTION AND -OR STRUCTURE OF POLYPEPTIDES**

(30) Priority: 06.05.2022 EP 22172141
(71) Applicant: Eberhard Karls Universität Tübingen, 72076 Tübingen (DE)
(72) Inventor: HIRT, Bernhard, 72070 Tübingen (DE); FEIL, Gerhard, 72076 Tübingen (DE); KALBACHER, Hubert, 72070 Tübingen (DE); PIETRZIK, Nikolas, 72076 Tübingen (DE); GLEISER, Corinna, 72108 Rottenburg a. N. (DE); JUST, Lothar, 72076 Tübingen (DE)
(74) Representative: König Szynka Tilmann von Renesse Patentanwälte Partnerschaft mbB Düsseldorf

(57) **Abstract**

The invention relates to the use of diamines according to formula (I), preferably according to formula (II), for interfering with function and/or structure of a polypeptide. In particular, the invention relates to the use of one or more of the diamines *N*-dodecyl-1,3-diamino propane (C12), *N*'-(3-aminopropyl)-*N*'-n-dodecyl-1,3-diamino propane (Bis-C12), *N*-(α-glutaminyl amido)-*N*'-n-dodecyl propane-1,3-diamine (α Glu-C12), *N*-(γ-glutaminyl amido)-*N*'-n-dodecyl propane-1,3-diamine (γGlu-C12) and *N*-oleyl-1,3-diamino propane (Oleyl-C12) for interfering with the function and/or the structure of polypeptides.

## Description

The invention relates to the use of diamines according to formula (I), preferably to diamines according to formula (II) for modulating a polypeptide, in particular for interfering with the function and/or the structure of a polypeptide, preferably of an enzyme. In particular, the invention relates to the inhibition of enzyme activity.

### Background of the Invention

Functional and/or structural integrity of polypeptides and consequently means for interfering therewith are of high significance in various fields of science, medicine, and technology.

Formaldehyde and detergents with demonstrated denaturing effects on proteins, such as aldehydes are routinely used to this end. However, their use brings about certain disadvantages. Most notable is the toxic, carcinogenic and mutagenic potential of formaldehyde.

WO 2016/016168 A1 discloses the use of a 5-oxo-pyrrolidine-2-carboxylic acid derivate for modulating the activity of non-structural proteins. In particular, 5-oxo-pyrrolidine-2-carboxylic acid derivatives were found to have a denaturing effect on proteins and to be effective in inhibiting enzyme activities. For this effect of such 5-oxo-pyrrolidine-2-carboxylic acid derivatives their specific structure containing a pyrrolidine ring was considered to play an important role, specifically an oxo pyrrolidine as head group.

Certain diamines have long been used for disinfecting purposes. Especially N-alkylated 1,3-diamino propanes, including "C12", i.e. *N*'-dodecyl-1,3-diamino propane (C₁₅H₃₄N₂; molecular weight 242.45; CAS 5538-95-4) and "Bis-C12", i.e. *N*'-(3-aminopropyl)-*N*'-n-dodecyl-1,3-diamino propane (C₁₈H₄₁N₃; molecular weight 299.54; CAS 2372-82-9), are used in a variety of products like disinfectants and cleaners. Despite their common usage, little is known about the mechanisms behind their biocidal properties. It is widely accepted, that the N-alkyl chain merely induces cell membrane lysis due to its lipophilic nature. In contrast to 5-oxo-pyrrolidine-2-carboxylic acid derivatives, C12 and Bis-C12 do not comprise an oxo-pyrrolidine head group.

### Short Description of the Invention

It has now surprisingly been found that diamines according to formula (I), in particular those of formula (II), can be used for interfering with the function and/or structure of a polypeptide. This makes such diamines highly suitable for, for example, inhibiting enzymes, i.e., for inhibiting enzyme activities and for protein denaturation that is of interest for numerous applications like e.g. tissue preservation, pharmaceutical preparations or food and feed products.

The diamines of the present invention have the following formula (I) 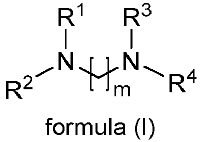 with
m being an integer from 1 to 6; and
R¹ being H;
R² being H, or a polar substituent independently selected from a saccharide, a polyalcohol, an amino acid with the exception of pyroglutamic acid, a peptide, an organic acid, including a carboxylate, sulfonate and phosphate, or a substituent selected from 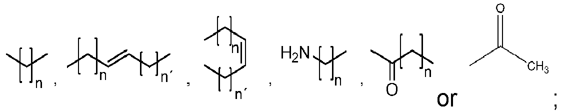 with n and n' being independently selected from an integer from 1 to 25;
R³ and R⁴ being independently selected from 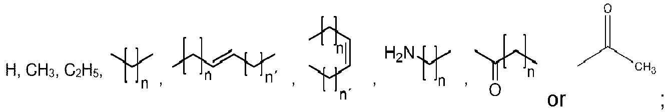 with n and n' being as defined above.

Preferably, the diamine of the present invention is according to formula (II) 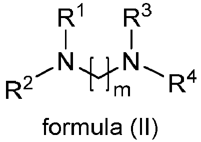 with
m being an integer from 1 to 3; and
R¹ being H;
R² being independently selected from an amino acid with the exception of pyroglutamic acid, and an organic acid;
R³ and R⁴ being independently selected from H, 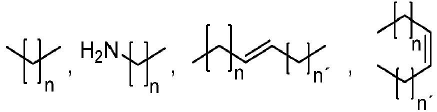 with n and n' being independently selected from an integer from 1 to 14.
R² is not pyroglutamic acid, which includes pyroglutamic acid and derivatives thereof. Specifically, R² is not a structure of formula (III): 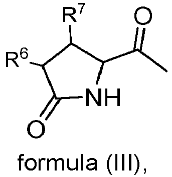 with R⁶ and R⁷ being selected from H, XH, 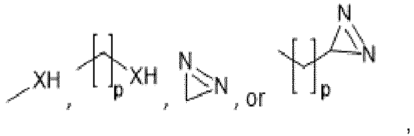 with p being an integer from 1 to 20 and with X being O or S.

That such diamines can be used for interfering with the function and/or structure of a polypeptide was unexpected for at least two reasons: First, the biocidal activity of, e.g., C12 or Bis-C12 had been linked to cell membrane lysis and thus not to protein denaturation. Second, the comparable usability of 5-oxo-pyrrolidine-2-carboxylic acid derivatives had been attributed to its specific structure containing a distinct structural element, namely an oxo-pyrrolidine head group. However, this element is absent from the diamines according to formulae (I) and (II) because pyroglutamic acid, i.e. structures of formula (III) are excluded in view of the above definition of R². The invention thus relates to the use of a diamine for interfering with the function and/or the structure of a polypeptide, wherein the diamine is according to formula (I), preferably the diamine is according to formula (II).

Alternative and preferred embodiments are described in the dependent claims.

### Short Description of the Figures

- Figure 1:: *N*-dodecyl-1,3-diamino propane (C12).

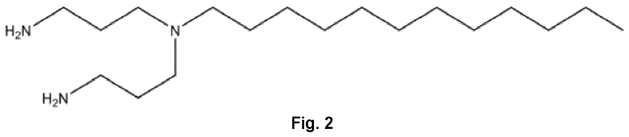

- Figure 2:: *N*'-(3-aminopropyl)-*N*'-n-dodecyl-1,3-diamino propane (Bis-C12).

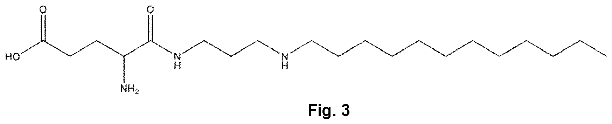

- Figure 3:: *N*-(α-glutaminyl amido)-*N*'-n-dodecyl-1,3-diamino propane (αGlu-C12).

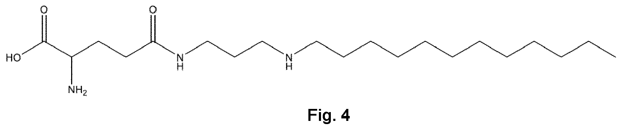

- Figure 4:: *N*-(γ-glutaminyl amido)-*N*'-n-dodecyl-1,3-diamino propane (γGlu-C12).

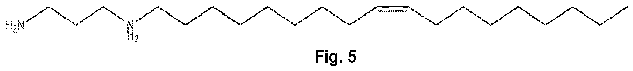

- Figure 5:: *N*-oleyl-1,3-diamino propane (Oleyl-C12).
- Figure 6:: Egg white treated with C12 (top left) and Bis-C12 (bottom left) and control samples (water added to egg white; right side) at room temperature. The diamine treated egg white samples show a strong denaturating effect.
- Figure 7:: Diagram showing the results of a FRET-based enzyme-assay for determining the effect of C12 (concentration range of 1 mM to 10 mM) and Bis-C12 (concentration range of 2 mM to 8 mM) on the activity of enzymes of the human intestine lysate. For comparison, a positive (untreated collagenase) and negative control were applied.
- Figure 8:: Diagram showing the results of a fluorescence-based enzyme-assay for determining the effect of C12 (concentration range of 1 mM to 10 mM) and Bis-C12 (concentration range of 2 mM to 8 mM) on the COX-2 activity. For comparison, a positive (untreated COX-2) and negative control were applied.
- Figure 9:: Diagram showing the results of a FRET-based enzyme-assay for determining the effect of C12 (concentration range of 1 mM to 41 mM) and Bis-C12 (concentration range of 2 mM to 33 mM) on the activity of collagenase. For comparison, a positive (untreated collagenase) and negative control were applied.
- Figure 10:: Cellulose sheets incubated with 41 mM C12 and 1 mg/mL cellulase (first from left), 33 mM Bis-C12 and 1 mg/mL cellulase (second from left), a positive control (cellulose sheet incubated in MOPS buffer and 1 mg/mL cellulase; second from right) and a negative control (cellulose sheet incubated in MOPS buffer; first from right) after storing for 3 days at 37 °C. As shown, diamine-treated cellulose scaffolds inhibit cellulase activity and maintain the structural integrity.
- Figure 11:: Diagram showing the results of a FRET-based enzyme-assay for determining the effect of C12 (41 mM) and Bis-C12 (33 mM) on the activity of elastase. For comparison, a positive (untreated elastase) and negative control were applied.

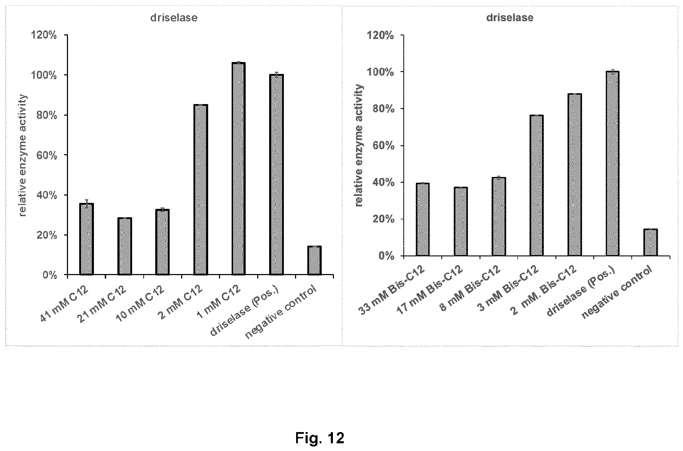

- Figure 12:: Diagram showing the results of a FRET-based enzyme-assay for determining the inactivation of driselase by C12 (concentration range of 1 mM to 41 mM) and Bis-C12 (concentration range of 2 mM to 33 mM). For comparison, a positive (untreated driselase) and negative control were applied.
- Figure 13:: Diagram showing the results of a fluorescence-based RNase-assay for determining the effect of 41 mM C12 and 33 mM Bis-C12 on the activity of RNase. For comparison, a positive (untreated RNase) and negative control were applied.
- Figure 14:: Diagram showing the results of a FRET-based enzyme-assay for determining the effect of αGlu-C12 (concentration range of 1.35 mM to 6.73 mM) and γGlu-C12 (concentration range of 1.35 mM to 6.73 mM) on the activity of collagenase. For comparison, a positive (untreated collagenase) and negative control were applied.
- Figure 15:: Diagram showing the results of a FRET-based enzyme-assay for determining the effect of Oleyl-C12 (concentration range of 1.6 mM to 31 mM) on the activity of collagenase. For comparison, a positive (untreated collagenase) and negative control were applied.
- Figure 16:: Coupling of *N*-dodecyl-1,3-diamino propane (C12) to NHS-activated carboxy groups on the surface of magnetic beads.
- Figure 17:: Coupling of *N*'-(3-aminopropyl)-*N*'-n-dodecyl-1,3-diamino propane (BisC12) to NHS-activated carboxy groups on the surface of magnetic beads.
- Figure 18:: Coupling of *N*-(α-glutaminyl amido)-*N*'-n-dodecyl-1,3-diamino propane (αGlu-C12) to NHS-activated carboxy groups on the surface of magnetic beads.
- Figure 19:: Diagram showing the results of a FRET-based endoprotease assay for determining the effect of C12 (500 µM) and Bis-C12 (100 µM) coupled to NHS-activated beads on collagenase activity. For comparison also a positive (aminoethanol-coupled beads, Pos.) and negative control were measured.
- Figure 20:: Diagram showing the results of a FRET-based endoprotease-assay for determining the effect of αGlu-C12 (concentration range of 0.03 µM to 0.59 µM on collagenase activity. For comparison, a positive (untreated collagenase, Pos.) and negative control were applied.
- Figure 21:: Cellulose sheets coupled to C12 (left side), to Bis-C12 (middle) and a control sheet (right side; without any coupled 1,3-diamino propane) after intensive washing steps and subsequent inoculation with a betagalactosidase-expressing *E. coli* strain and incubation at 37 °C for 2 days. Cellulose scaffolds covalently bound to C-12 and Bis-C12 exhibit biocidal activity.
- Figure 22:: Cellulose sheets coupled to C12 (left), Bis-C12 (middle) and a control (cellulose sheet without any coupled 1,3-diamino propane, right) after intensive washing steps with water and subsequent inoculation with a cellulase solution at 37 °C for 28 days. As shown, cellulose scaffolds coupled to C12 or Bis-C12 inhibit cellulase activity and maintain the structural integrity.

### Detailed Description of the Invention

The invention relates to the use of a diamine for interfering with the function and/or the structure of a polypeptide, in particular for inhibiting an enzyme, i.e., for inhibiting enzyme activity, wherein the diamine is according to formula (I) 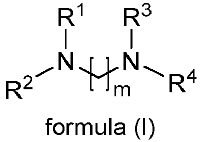 with
m being an integer from 1 to 6; preferably m being an integer from 1 to 3, further preferred from 2 to 3, most preferably m is 3, and
R¹ being H;
R² beingH, or a polar substituent independently selected from a saccharide, a polyalcohol, an amino acid with the exception of pyroglutamic acid, a peptide, an organic acid, including a carboxylate, sulfonate and phosphate, or a substituent selected from 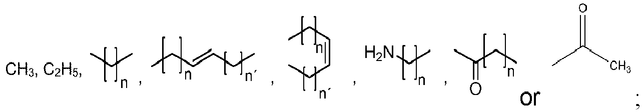 with n and n' being independently selected from an integer from 1 to 25; preferably n and n' are independently selected from an integer from 1 to 15, further preferred from 1 to 12, still further preferred from 3 to 12; still more preferred from 3 to 11;
R³ and R⁴ being independently selected from 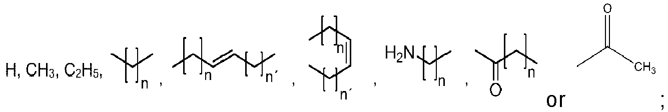 with n and n' being as defined above.

Preferably, one of R³ and R⁴ being selected from H, 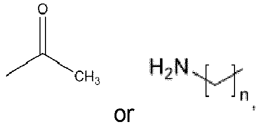 and the other being selected from

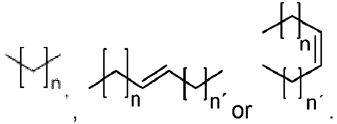

In a preferred embodiment, one of R³ and R⁴ is H and the other is 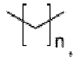 with n being an integer between 4 to 12, preferably 8 to 12, most preferably 11.

In another preferred embodiment, one of R³ and R⁴ is 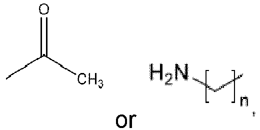 and the other is 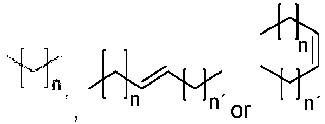 with n and n' being independently selected from an integer from 3 to 12; still more preferred from 3 to 11.

Preferably, the diamine is according to formula (II) 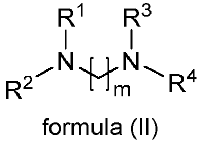 with
m being an integer from 1 to 3; more preferably m being 2 or 3 and, most preferably, m is 3; and
R¹ being H;
R² being independently selected from an amino acid with the exception of pyroglutamic acid, and an organic acid;
R³ and R⁴ being independently selected from H, 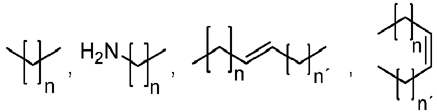 with n and n' being independently selected from an integer from 1 to 14, further preferred from 3 to 12; still more preferred from 3 to 11. Preferably, one of R³ and R⁴ being H and the other being selected from 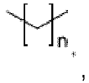 wherein n is an integer from 7 to 14, preferably from 8 to 12 and most preferred n is 11.

In other embodiments, one of R³ and R⁴ being 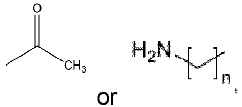 and the other is 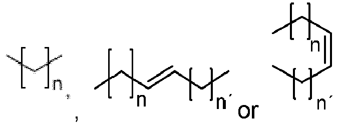 with n and n' being independently selected from an integer from 3 to 12; still more preferred from 3 to 11.

The diamine can also be a stereoisomer, racemic mixture, solvate such as hydrate or a salt of a compound of formulae (I) or (II).

R² can be an amino acid, which includes natural and non-natural amino acids as well as stereoisomers thereof. In particular, the amino acid is a stereoisomer of a natural amino acid or a non-natural amino acid. R² is not pyroglutamic acid or a derivative thereof, namely R² is not a structure of formula (III): 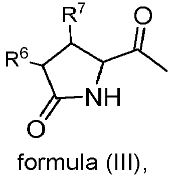 with R⁶ and R⁷ being selected from H, XH, 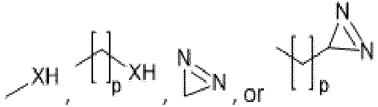 with p being an integer from 1 to 20 and with X being O or S.

It is further preferred that R² does not comprise an oxo-pyrrolidine ring or a pyrrolidine ring, more preferably R² does not comprise a heterocyclic ring. A heterocyclic ring refers to a saturated or unsaturated ring that incorporates one or more heteroatoms, i.e., O, N and/or S.

Preferably, the diamine does not have the following structure, i.e. the diamine is not a 5-oxo-pyrrolidine-2-carboxylic acid derivative including stereoisomers, or racemic mixtures thereof, solvates like hydrates, and salts:

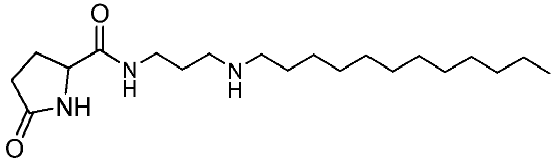

It is further preferred that diamines having the following formula (IV) are excluded, i.e. the diamine does not have a structure of formula (IV): 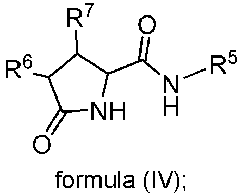 wherein R⁵ is selected from 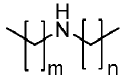 with m and n being as defined above and with R⁶ and R⁷ selected from H, XH, 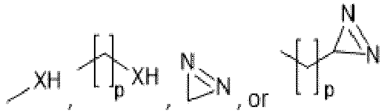 with p being an integer from 1 to 20 and with X being O or S.

The terms "protein" and "polypeptide" or "peptide" are used interchangeably herein. The term "polar" refers to the presence of heteroatoms, in particular selected from one or more of N, O or S within R².

The diamines of the inventive use are according to the above formulae (I) and (II).

In a preferred embodiment, the diamine is one or more of
*N*-dodecyl-1,3-diamino propane (C12).
*N*'-(3-aminopropyl)-*N*'-n-dodecyl-1,3-diamino propane (Bis-C12).
*N*-oleyl-1,3-diamino propane (Oleyl-C12).
*N*-(α-glutaminyl amido)-*N*'-n-dodecyl-1,3-diamino propane (αGlu-C12).
*N*-(γ-glutaminyl amido)-*N*'-n-dodecyl-1,3-diamino propane (γGlu-C12), i.e., it can be any of these diamines or a mixture of one or more of them.

In a preferred embodiment, the diamine is C12.

In another preferred embodiment, the diamine is Bis-C12.

In yet another preferred embodiment, the diamine is Oleyl-C12.

In yet another preferred embodiment, the diamine is αGlu-C12.

In yet another preferred embodiment, the diamine is γGlu-C12.

The invention is based on the finding that diamines according to formulae (I) and (II) can be used for modulating a polypeptide, in particular for interfering with the function and/or the structure of a polypeptide.

As used herein, "interfering with the function and/or the structure" is intended to mean a targeted change in function and/or structure of a protein; this change may include an increase, i.e. a positive change, or a decrease, i.e. a negative change. Preferably, the change in function and/or structure of a protein is a decrease, i.e. a negative change of its function and/or structure.

According to the invention a polypeptide is selected from a hormone, antibody, cytokine, enzyme, exotoxine, interferon, interleukin, chemokine, growth factor, colony stimulating factor, tumor necrosis factor, receptor, ribozyme, other disease-mediating enzymes in a targeted manner, collagen, keratin, elastin and wherein the protein is not a prion. In particular, the polypeptide is an enzyme, and the decrease of its function is an inhibition of enzyme activity.
The function of proteins is linked to their three-dimensional form; this form includes secondary, tertiary and, where applicable, quaternary structures. Interfering with their structure might also be referred to as denaturation, i.e. a process in which the protein loses, at least in part, its three-dimensional form.

Due to the function-structure relationship of proteins, such denaturation often leads, at least partially, to a loss of function. In case the protein is an enzyme, the relevant function might be referred to as an "activity", and loss thereof might be referred to as "inhibiting" or "inactivating".
In a preferred embodiment, a diamine according to the above formula (I), preferably formula (II), is used for inhibiting an enzyme, i.e., for inhibiting enzyme activity.
In a particular embodiment, the inhibiting enzyme activity may refer to a decrease in activity of at least about 0.5 %, preferably of at least about 5 %, more preferably of at least about 10 %, still more preferably of at least about 30 %, further preferably of at least about 50 %, still further preferably of at least about 80 %, still further preferably of at least about 90 % and most preferably of about 100 %, i.e. complete inhibition.

Such activities include those of oxidoreductases, such as cyclooxygenase or alcohol dehydrogenases; hydrolases, such as alkali phosphatases, endoproteases, nucleases, e.g. RNases or DNases, lipases; transferases; lyases; isomerases; and ligases.

In a preferred embodiment, the enzyme is selected from an oxidoreductase, preferably from a dioxygenase, an alcohol dehydrogenase and/or a peroxidase.

In a particular embodiment, the oxidoreductase is a cyclooxygenase.

In yet another preferred embodiment, the enzyme is selected from a hydrolase, preferably from a protease, a nuclease and/or a alkali phosphatase, wherein the protease is selected from zymogene, serine proteases, metalloproteases, collagenases, stromelysins, gelatinases, meprins, insulysin, CAAX-prenylproteases, aspartic peptidases, glutamylhydrolase, pryoglutamyl-peptidase, ubiquitinyl-hydrolase, oligopeptidase, an elastase, a carbohydrase such as driselase, and wherein the nuclease is selected from a RNase and/or DNase.

Further, it has been found that the effects of the diamines as disclosed herein on the function and/or structure of a polypeptide are dose-dependent which allows their adjustment depending on specific application purposes.

The diamine according to the above formula (I), in particular according to the above formula (II), can be coupled via a linker and/or attached to a substrate, like e.g. any macromolecular structure, or surface. Unexpectedly, after coupling and/or attaching the diamines according to the above formula (I), in particular according to the above formula (II) to the substrate, they still exhibit the above activity, i.e. they still modulate a polypeptide, in particular interfere with the function and/or the structure of a polypeptide and can thus be used for interfering with the function and/or the structure of a polypeptide.

Linker as used herein, encompasses a molecule with specific features, like a tether to a functional group enabling covalent coupling, single atoms or even covalent bonds, preferably two-centre two-electron bond types. A linker can be derived from a functional group or it can be derived from a molecule comprising at least one functional group that is or is not already attached to or forms part of the substrate. The term linker thus encompasses embodiments in which the functional group or molecule is naturally present on the substrate and likewise in which it is generated by chemical or physical modifications on the substrate.

According to the present invention, a linker is the residue obtainable by reacting a linking agent optionally coupled to a substrate with a primary or acyclic secondary amino group of the diamine backbone. An intermediate product is a linking agent coupled to a substrate, which still comprises a functional group allowing bond formation with a primary or acyclic secondary amino group of the diamine. An alternative intermediate product is a linking agent coupled to a primary or acyclic secondary amino group of the diamine backbone, which still comprises a functional group allowing bond formation with the substrate.

Commercially available linking agents, substrates and intermediate products of linking agents coupled to a substrate can be applied, according to the present invention.

According to an embodiment, the linkage to at least one primary or acyclic secondary amino group of the diamine and/or to the substrate is via a functional group derived from isothiocyanate (S=C=N-), isocyanate (O=C=N-), active ester (e.g. *N*-hydroxysuccinimide-active ester, perfluorophenyl active ester), halide (e.g. F⁻, Cl⁻, Br, I⁻), nitrile (CN⁻), aryl sulfonyl halide, alkyl sulfonyl halide, aldehyde, ketone, dialdehyde, epoxide, di- and polydentate epoxy ether (e.g. crosslinkers and hardeners of the state of the art), halogenated N-heterocycle, aryl halide (such as aryl chloride), alkyl halide (such as alkyl chloride), carboxylic acid ester, imidoester, carbodiimide, double or triple bond, hydroxyl, peroxide, carboxylate, carbonate, amine, anhydride, ester, ether, thiol or sulfonate.

In a preferred embodiment, the linking agent is N-hydroxysuccinimide (NHS)-active ester.

The term "substrate" encompasses any material including absorbents, adsorbents, hygroscopic and porous materials, such as fabrics (textiles), e.g. cotton, wool, hemp, silk, polyester, polyamide; building materials, e.g. straw, glass wool, rock wool, silicone, gypsum, lime, cement, concrete, bricks, porous and absorbent stones, clay; glues and gels, biological and synthetic sponges for cleaning and medical applications, porous and sintered metals, porous and absorbent ceramics, biological tissues, natural and processed biomaterials, e.g. extracellular matrix molecules, scaffolds, bone, wood, leather, paper, cardboard, resins, plastics and composite materials. The term also includes polymers, such as, e.g. polyamides, polyurethane, polypeptides, polyols or polyesters. The polyols include polysaccharides, in particular cellulose and chitosan. In an embodiment, the substrate is selected from a synthetic sponge, a fabric, leather, bone tissue or wood. In another embodiment, the substrate is a fabric and the fabric comprises cellulose, silk or a polyester, more preferably the fabric is cotton, i.e. the fabric comprises cellulose and may additionally comprise waxes, fats, pectins and/or water. The substrate is in an embodiment selected from metal, glass, ceramic, polymer, textile and/or natural substance such as wood. The substrate can comprise a polysaccharide, such as cellulose. The substrate may also be a powdered polysaccharide, such as chitosan and carboxymethylcellulose. The substrate can also be a saccharide, a polyalcohol, a nucleic acid, an amino acid or an amino acid derivative, a peptide, a protein or a protein derivative, a heterocyclic compound, an organic acid, including a carboxylate, sulfonate, and phosphate. The substrate can also comprise a polymer forming magnetic particles or magnetic beads, in particular magnetic beads comprising carboxy groups. Said functionalized magnetic beads can be activated with NHS, thus forming NHS-activated magnetic beads as linking agent coupled to the substrate.

A substrate can also be a specially treated surface that allows the coupling of diamines to the substrate. Surface activation and modification for the covalent binding of diamines to many substrates and materials such as metals, glass, ceramics, polymers, textiles and natural materials may be carried out by plasma treatment. For example, the surface can be activated by generating free radicals and by anchoring functional groups, such as hydroxyl, carbonyl, peroxyl, carboxyl, or amines.

In a preferred embodiment, the diamine is coupled to a polymer, glass, ceramic, metal or textile, more preferably to a polymer selected from a polysaccharide or a polyalcohol, still more preferably to cellulose.

The term "coupled" as used herein refers to a covalent bond, i.e. the diamine is covalently bound to the substrate. This does not exclude the additional presence of non-covalent interactions, like e.g. hydrogen bonding, Van der Waals forces and/or ionic interactions.

The term "attach" or "attachment" as used herein refers to a non-covalent interaction. Namely, the attachment to the substrate is based on non-covalent interactions, which does, however, not exclude the additional presence of covalent interactions. Most preferred, the attachment is a non-covalent attachment also referred to as adhesive immobilization. The attachment to the substrate preferably involves one or more of hydrogen bonding, Van der Waals forces and/or ionic interactions.

In addition to the foregoing, modulating the state of matter of the diamine according to the above formula (I), in particular according to the above formula (II) in an aqueous milieu, can be used for technical penetration and immobilization, i.e. for coupling and/or attaching the diamine to a substrate, still exhibiting the above activity, i.e. they still modulate a polypeptide, in particular interfere with the function and/or the structure of a polypeptide and can thus be used for interfering with the function and/or the structure of a polypeptide. Such modulating of the state of matter of the diamine can be achieved by changing the pH, temperature and/or salt concentration.

The modulation of the state of matter refers to the liquefying and/or the solidifying of an aqueous solution of the diamine. The liquefying preferably comprises one or more of the following: heating the aqueous solution of the diamine to a temperature of 44 °C or more; decreasing the pH of the aqueous solution of the diamine to a pH of 8 or less; decreasing the salt concentration of the aqueous solution of the diamine. Respectively, the solidifying of an aqueous solution of the diamine preferably comprises one or more of the following: lowering the temperature of the aqueous solution of the diamine to a temperature below 44 °C; increasing the pH of the aqueous solution of the diamine to a pH above 8; increasing the salt concentration of the aqueous solution of the diamine.

The suitability of the diamines according to formulae (I) and (II) to inhibit enzyme activities was unexpected since the biocidal activity of e.g. C12 or Bis-C12 was understood to be based on cell membrane lysis and thus, not attributed to protein denaturation. Further, it was considered that the specific structure containing a distinct structural element, namely the heterocyclic oxo-pyrrolidine head group, would play an important role for the comparable usability of 5-oxo-pyrrolidine-2-carboxylic acid derivatives, an element, which however is absent from the diamines according to formulae (I) and (II).

In line with the foregoing one, the invention notably includes the following specific embodiments:
The use of *N*-dodecyl-1,3-diamino propane (C12) for inhibiting the activity of enzymes of human intestine lysate.
The use of *N*-dodecyl-1,3-diamino propane (C12) for inhibiting the activity of a cyclooxygenase.
The use of *N*-dodecyl-1,3-diamino propane (C12) for inhibiting the activity of a collagenase.
The use of *N*-dodecyl-1,3-diamino propane (C12) for inhibiting the activity of a cellulase.
The use of *N*-dodecyl-1,3-diamino propane (C12) for inhibiting the activity of an elastase.
The use of *N*-dodecyl-1,3-diamino propane (C12) for inhibiting the activity of a driselase.
The use of *N*-dodecyl-1,3-diamino propane (C12) for inhibiting the activity of a RNase.
The use of *N*'-(3-aminopropyl)-*N*'-n-dodecyl-1,3-diamino propane (Bis-C12) for inhibiting
the activity of enzymes of human intestine lysate.
The use of *N*'-(3-aminopropyl)-*N*'-n-dodecyl-1,3-diamino propane (Bis-C12) for inhibiting the activity of a cyclooxygenase.
The use of *N*'-(3-aminopropyl)-*N*'-n-dodecyl-1,3-diamino propane (Bis-C12) for inhibiting the activity of a collagenase.
The use of *N*'-(3-aminopropyl)-*N*'-n-dodecyl-1,3-diamino propane (Bis-C12) for inhibiting the activity of a cellulase.
The use of *N*'-(3-aminopropyl)-*N*'-n-dodecyl-1,3-diamino propane (Bis-C12) for inhibiting the activity of an elastase.
The use of *N*'-(3-aminopropyl)-*N*'-n-dodecyl-1,3-diamino propane (Bis-C12) for inhibiting the activity of a driselase.
The use of *N*'-(3-aminopropyl)-*N*'-n-dodecyl-1,3-diamino propane (Bis-C12) for inhibiting the activity of a RNase.
The use of *N*-(α-glutaminyl amido)-*N*'-n-dodecyl-1,3-diamino propane (αGlu-C12) for inhibiting the activity of a collagenase.
The use of *N*-(γ-glutaminyl amido)-*N*'-n-dodecyl-1,3-diamino propane (γGlu-C12) for inhibiting the activity of a collagenase.
The use of *N*-oleyl-1,3-diamino propane (Oleyl-C12) for inhibiting the activity of a collagenase.
The invention will be further described in the following examples, which are not to be construed as limiting the invention.

### Examples

### Example 1: Egg white denaturation by C12 and Bis-C12

The following experiment demonstrates the denaturation effects of diamines of formulae (I) and (II) on proteins of egg white.

100 µl of *N*-dodecyl-1,3-diamino propane (C12) or *N*'-(3-aminopropyl)-*N*'-n-dodecyl-1,3-diamino propane (Bis-C12) (hereinafter "agent") were added to 900 µl of transparent egg white at a final concentration of 1 % (w/v) at room temperature. In order to exclude alkaline effects, each agent was adjusted to a pH of 7. For controls, 100 µl aqua dest. was used instead of C12 or Bis-C12.

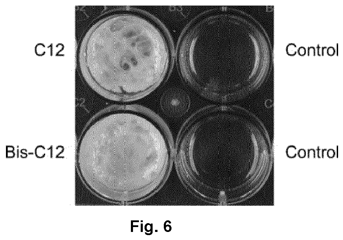

The effect of denaturation was clearly visible in form of white precipitates in comparison to the controls. These results are shown in Fig. 6.

### Example 2: Inactivation of enzymes of the human intestine lysate by C12 and Bis-C12

Proteases expressed in the human intestine lysate include: zymogene, serine proteases: e.g. plasmin, thrombin; metalloproteases: e.g. ADAM-metalloproteases, matrix metalloproteases (MMPs), collagenases, stromelysins, gelatinases, meprins, insulysin, CAAX-prenylproteases; aspartic peptidases: e.g. cathepepsin A and D, glutamylhydrolase, pryoglutamyl-peptidase, ubiquitinyl-hydrolase; oligopeptidase: e.g. prolyl oligopeptidase, thimet oligopeptidase and endo-acting prolyl oligopeptidase. Studies on the enzyme inhibitory effect of *N*-dodecyl-1,3-diamino propane (C12) and *N*'-(3-aminopropyl)-*N*'-n-dodecyl-1,3-diamino propane (Bis-C12) in human intestine lysates were carried out.

The tissue lysates were tested before and after treatment with C12 or Bis-C12 by help of a fluorescence resonance energy transfer peptide library containing about 2.5 million peptides (Kapprell et al. (2011)) and with the sensitivity in the nanogram range for all known proteases (P-Check substrate, PANATecs, Germany).

In the test process, the human intestinal lysate was diluted with 50 mM MOPS/2 mM CaCl₂ (pH 7.0) buffer in the relation 1:5. It was supplemented either with 1 mM, 2 mM, or 10 mM C12, or with 2 mM, 3 mM, or 8 mM Bis-C12 and incubated for 30 minutes at room temperature. To separate C12 or Bis-12 from the human intestine lysate, the preparation was washed three times with 50 mM MOPS/2 mM CaCl₂ (pH 7.0; wash buffer) by centrifugation (400 x g) for 30 minutes on an Amicon^{®} Ultra-4* Centrifugal Filter Unit (10.000 NMWL; Merck Millipore, Germany). Following the final washing step, 400 µl wash buffer was added to the C12- or Bis-C12 free enzyme concentrate on the filter membrane. 90 µl of the concentrated, both treated and untreated, enzymes of the human intestine were taken up with the aid of a pipette, transferred to a new vessel and mixed with 10 µl of P-Check substrate. Enzyme activity was determined by the detection of the change of fluorescence intensity (RFU) in a kinetic mode every 60 seconds for at least 30 minutes on a Cytation 5 Multi-Mode-Reader (BioTek, Germany).

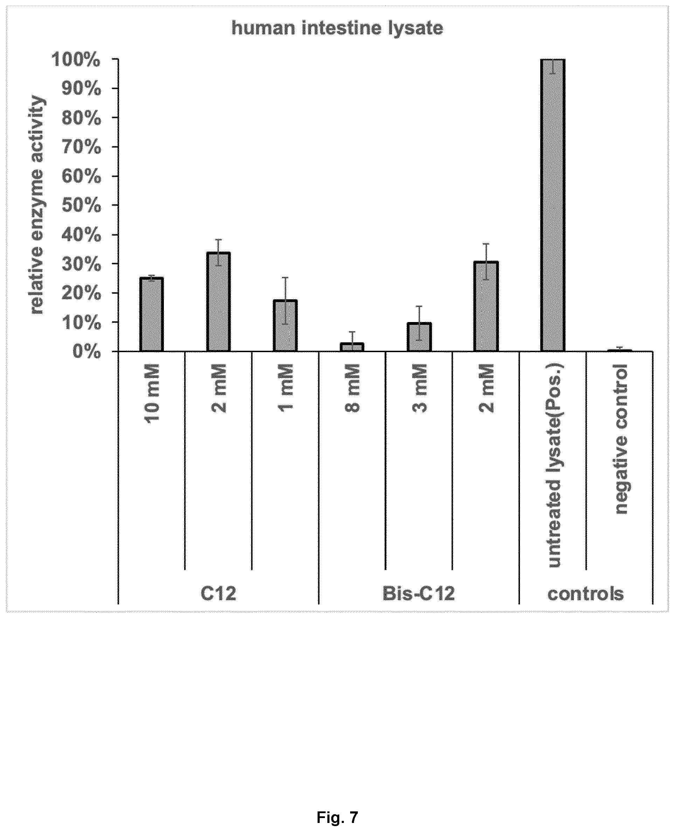

As can be seen from the results depicted in Fig. 7, all proteases present in the intestine were inhibited by C12 and Bis-C12.

### Example 3: Inactivation of cyclooxygenase by C12 and Bis-C12

Cyclooxygenase (COX), also known as prostaglandin-endoperoxide synthase, are bifunctional enzymes exhibiting both COX and peroxidase activities. The COX component converts arachidonic acid to a hydroperoxy endoperoxide (PGG2), and the peroxidase component reduces the endoperoxide to the corresponding alcohol (PGH2), the precursor of PGs, thromboxanes, and prostacyclins. There are two known isoenzymes: COX-1 and COX-2. COX-1 is constitutively expressed in many tissues and is the predominant form in gastric mucosa and in kidney. COX-2 is not expressed in most cells, but elevated levels are observed during inflammation.

### Measurement principle:

A fluorescence-based method for detecting COX-1 or COX-2 activity was used. The assay utilizes the peroxidase component of COXs. The reaction between PGG2 and ADHP (10-acetyl-3,7-dihydroxyphenoxazine) produces the highly fluorescent compound resorufin. Resorufin fluorescence can be easily analysed with an excitation wavelength between 530-540 nm and an emission wavelength between 585-595 nm.

For the testing of the inactivation of COX-2 by *N*-dodecyl-1,3-diamino propane (C12) and *N*'-(3-aminopropyl)-*N*'-n-dodecyl-1,3-diamino propane (Bis-C12), a commercial test system was used according to the information of the manufacturer (COX Activity Assay Kit (Fluorometric), Abcam, UK). In the test process, 2 µl human COX-2 (C0858; Sigma-Aldrich,Germany) was supplemented with 1 mM, 2 mM and 10 mM C12 or with 2 mM, 3 mM and 8 mM Bis-C12, respectively, and incubated for 20 minutes at room temperature.

Afterwards, the reaction mix (COX Probe, COX Cofactor and assay buffer) and the arachidonic acid were added. The COX activity was determined by the detection of the change of fluorescence intensity (RFU) in a kinetic mode for 15 seconds at least for 30 minutes on a Cytation 5 Multi-Mode-Reader (BioTek, Germany).

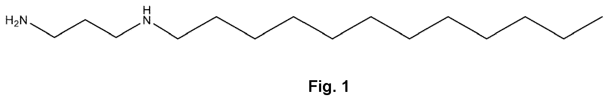

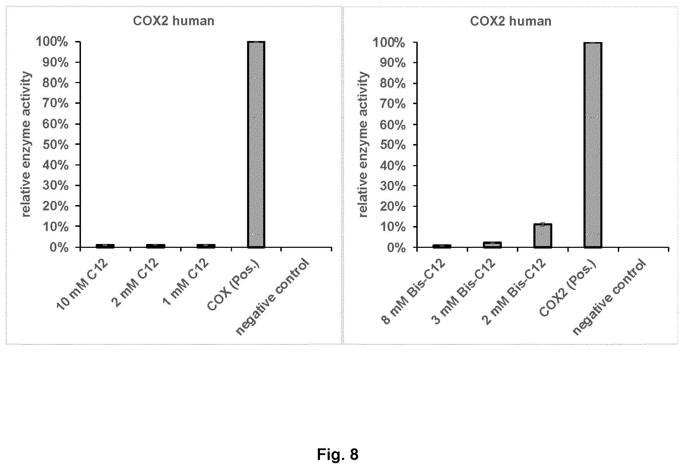

As can be seen from the results depicted in Fig. 8, 1 mM C12 or 8 mM Bis-C12 inactivate the COX-2 completely.

### Example 4: Inactivation of collagenase by C12 and Bis-C12

Collagenase is an enzyme in the matrix metalloproteinase family that breaks down collagen, assisting in degradation of the extracellular matrix in mammals, a key step in the pathogenesis of bacteria.

### Measurement principle:

The activity of collagenases was measured by means of a fluorescence resonance energy transfer peptide library containing about 2.5 million peptides, with the sensitivity in the nanogram range for all known proteases. The change in fluorescence intensity in the emission/excitation ratio at 405/320 nm is directly proportional to the enzyme activity. For the testing of the inactivation of collagenase by *N*-dodecyl-1,3-diamino propane (C12) and *N*'-(3-aminopropyl)-*N*'-n-dodecyl-1,3-diamino propane (Bis-C12), a commercial substrate containing 2.5 million peptides was used (P-Check substrate, PANATecs, Germany). In the test process, 0.22 mg/ml collagenase (Sigma-Aldrich, Merck, Germany) was treated with 41 mM, 21 mM, 10 mM, 2 mM or 1 mM C12, or with 33 mM, 17 mM, 8 mM, 3 mM and 2 mM Bis-C12 in 50 mM MOPS buffer supplemented with 2 mM CaCl₂ (pH 7.0) and incubated for 15 minutes at 37 °C. A positive control, i.e. collagenase without the addition of C12 or Bis-C12 as well as a negative control were also carried out. To separate the C12 or Bis-C12 from the collagenase, the preparation was washed three times with 50 mM MOPS/2 mM CaCl₂ (pH 7.0; wash buffer) by centrifugation (400 x g) for 30 minutes on an Amicon^{®} Ultra-4* Centrifugal Filter Unit (10.000 NMWL) (Merck Millipore, Germany). Following the final washing step, 400 µl wash buffer was added to the C12- or Bis-C12-free collagenase concentrate on the filter membrane. 90 µl of the concentrated both treated and untreated collagenase was taken up with the aid of a pipette, transferred to a new vessel and mixed with 10 µl of P-Check substrate. Collagenase activity was determined by the detection of the change of fluorescence intensity (RFU) in a kinetic mode every 60 seconds for at least 30 minutes on a Cytation 5 Multi-Mode-Reader (BioTek, Germany).

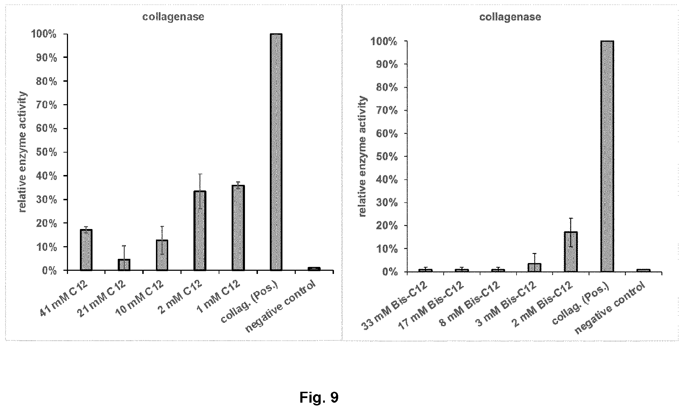

As can be seen from the results depicted in Fig. 9, concentrations up to 21 mM C12 lead to an about 80 % reduction of the collagenase activity and already 8 mM Bis-C12 inactivates the collagenase completely.

### Example 5: Inactivation of cellulase by C12 and Bis-C12

Cellulases are a family of enzymes that include β-glucosidases, endonucleases, and exoglycanases. These enzymes cleave the β-1,4-D-glycosidic bonds that link the glucose units comprising cellulose. In addition to being produced by plants, cellulase activity is found in many fungi and bacteria, including some plant pathogens.

For the testing of the inactivation of cellulase by *N*-dodecyl-1,3-diamino propane (C12) and *N*'-(3-aminopropyl)-*N*'-n-dodecyl-1,3-diamino propane (Bis-C12), 8 mm cellulose pieces were punched out from Whatman^{®} cellulose filter paper (98 % α -cellulose content, Merck Millipore, Germany). First, 2 mg/ml cellulase (cellulase from Trichoderma sp., Sigma-Aldrich, Merck, Germany) was incubated with 41 mM C12, or 33 mM Bis-C12 in 50 mM MOPS buffer (pH 7.0) for 40 min at room temperature. Afterwards, the cellulose pieces were stored protected from light at 37 °C either in 750 ml 50 mM MOPS buffer (pH 7.0) with 2 mg/ml cellulase, 750 ml 50 mM MOPS buffer (pH7.4) or with the preincubated C12- or Bis-C12-cellulase-mixture.

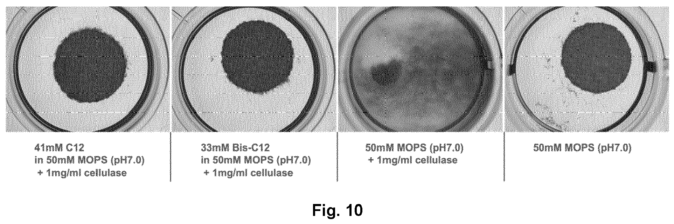

As can be seen from Fig. 10 after 3 days, a cellulose membrane incubated with 2 mg/ml cellulase was completely digested while the cellulose incubated with 2 mg/ml cellulase and 41 mM C12 or 33 mM Bis-C12 was still intact. The cellulose incubated in MOPS buffer alone, was also intact.

These results show the complete inactivation of cellulase by 33 mM C12 and 41 mM Bis-C12.

### Example 6: Inactivation of elastase by C12 and Bis-C12

Elastase is a serine protease produced by the pancreas that catalyses cleavage of carboxyl groups present on small hydrophobic amino acids, such as glycine, alanine, and valine. Its primary role is the breakdown of elastin, a protein that imparts elasticity to connective tissue. In addition, high levels of tissue destructive elastases were found in exudates from chronic wounds. This excessive action of elastase leads to reduce amounts of growth factors and endogenous proteinase inhibitors, causing the destruction of extracellular matrix and the chronification of wounds.

### Measurement principle:

The activity of elastase was measured by means of a fluorescence resonance energy transfer peptide library containing about 2.5 million peptides, with the sensitivity in the nanogram range for all known proteases. The change in fluorescence intensity in the emission/excitation ratio at 405/320 nm is directly proportional to the enzyme activity. For the testing of the inactivation of elastase from porcine pancreas by *N*-dodecyl-1,3-diamino propane (C12) and *N*'-(3-aminopropyl)-*N*'-n-dodecyl-1,3-diamino propane (Bis-C12), a commercial substrate containing 2.5 million peptides was used (P-Check substrate, PANATecs, Germany).

In the test process, 0.5 mg/ml elastase from porcine pancreas (Sigma-Aldrich, Merck, Germany) was treated with 41 mM C12 or 33 mM Bis-C12 in 50 mM MOPS buffer and incubated for 30 minutes at room temperature. A positive control, i.e. elastase without the addition of C12 or Bis-C12 as well as a negative control were also carried out. 90 µl of the treated and untreated elastase was mixed with 10 µl of P-Check substrate. Elastase activity was determined by the detection of the change of fluorescence intensity (RFU) in a kinetic mode every 60 seconds for at least 30 minutes on a Cytation 5 Multi-Mode-Reader (BioTek, Germany).

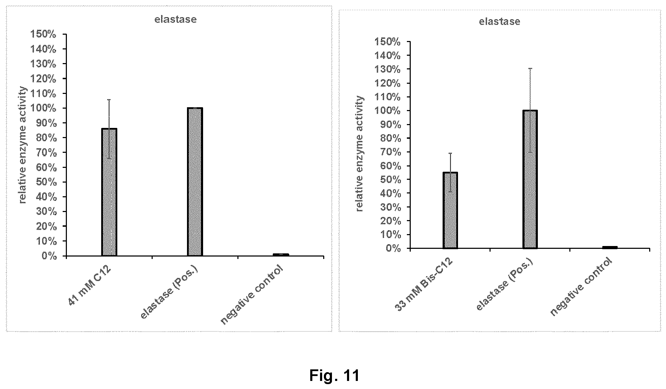

As can be seen from Fig. 11, in comparison to untreated elastase (positive control), the treatment with 41 mM C12 leads to an about 15 % reduction in the elastase activity, while the treatment with 33 mM Bis-C12 inactivates the elastase by nearly 50 %.

### Example 7: Inactivation of driselase by C12 and Bis-C12

Driselase is a natural mixture of cell wall degrading enzymes (fungal carbohydrolases) that contains cellulase, hemicellulase, pectinase, laminarinase and xylanase. Driselase releases cell wall carbohydrates.

### Measurement principle:

The activity of driselase was measured by means of a colorimetric amylase assay Kit that detects activity of driselase through a two-step reaction. In the amylase assay protocol, driselase will cleate the substrate ethylidene-pNP-G to produce smaller fragments that are modified by alpha-glucosidase. This causes the release of a chromophore that can be measured at OD = 405 nm.

For the testing of the inactivation of driselase by *N*-dodecyl-1,3-diamino propane (C12) and *N*'-(3-aminopropyl)-*N*'-n-dodecyl-1,3-diamino propane (Bis-C12), a commercial test kit was used according to the information of the manufacturer (Amylase Assay Kit (Colorimetric), Abcam, UK). In the test process, 50 µl driselase stock solution (6mg/ml D8037-1G,SigmaAldrich, Merck, Germany) was pipetted on the bottom a 96-well plate. Afterwards, each of the wells were incubated for 30 min at room temperature with either 2mM, 10 mM, 21 mM or 41 mM C12 or 2 mM, 3 mM, 8 mM, 17 mM or 33 mM Bis-C12 in MOPS buffer (pH 7.0). Then 100 µl of substrate mix was added to the wells and mixed thoroughly. Driselase activity was determined by measurement of the absorbance immediately at OD=405 nm in a kinetic mode, every 2 minutes, for 60 min at 25 °C protected from light.

As can be seen from Fig. 11 the treatment of driselase with at least 10 mM C12 or 8 mM Bis-C12 results in an about half reduction of driselase activity in comparison to the untreated driselase (positive control: Pos.).

### Example 8: Inactivation of ribonuclease by C12 and Bis-C12

Ribonuclease (RNase) is a type of nuclease that catalyses the degradation of RNA into smaller components.

### Measurement principle:

The activity of RNase was measured by means of a cleavable fluorescence-labelled RNase substrate, a modified RNA oligonucleotide that emits a green fluorescence if it is cleaved by RNase. The change in fluorescence intensity in the emission/excitation ratio at 490/520 nm is directly proportional to the enzyme activity.

For the testing of the inactivation of RNase A by *N*-dodecyl-1,3-diamino propane (C12) and *N*'-(3-aminopropyl)-*N*'-n-dodecyl-1,3-diamino propane (Bis-C12), a commercial test kit was used according to the information of the manufacturer (RNaseAlert Lab Test Kit, ThermoFisher Scientific, Germany). In the test process, 1 µl PureLink RNase A (12091021, ThermoFisher Scientific) was pipetted on the bottom of 3 wells on a 96-well plate and vacuum-dried at 50 °C for 30 minutes. Afterwards, each of the wells were incubated for 15 min at room temperature with either 41 mM C12 or 33 mM Bis-C12 in MOPS buffer (pH 7.0), a commercial RNase-decontamination agent (RNaseZAP^{™}, AM9780, Thermo Fisher), or nuclease-free water (negative control). The solutions were then removed and the wells rinsed twice with nuclease-free water. The dissolved fluorescence-labelled RNA substrate was pipetted onto the wells according to the manufacturer's instructions and the RNase activity was determined by the detection of the change of fluorescence intensity (RFU) in a kinetic mode for two minutes for at least 1 hour at 37 °C on a Cytation 5 Multi-Mode-Reader (BioTek, Germany).

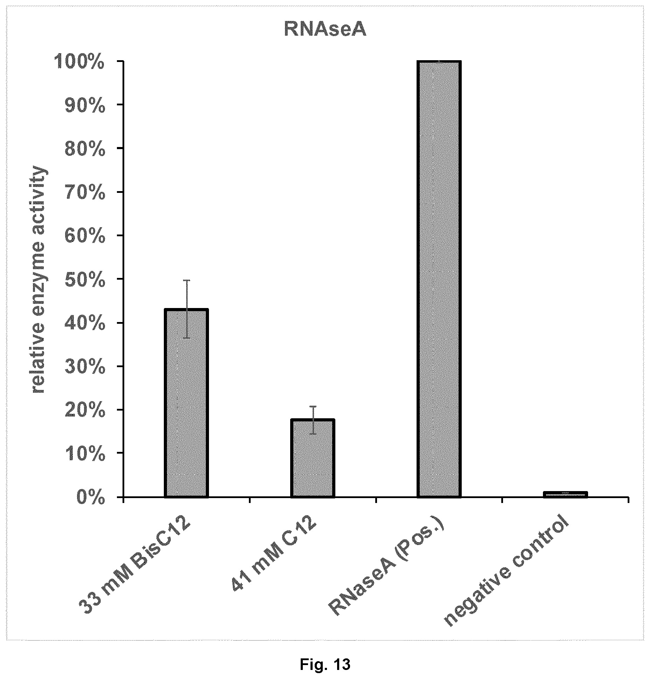

As can be seen from Fig. 13 the treatment of RNase A with 41 mM C12 or 33 mM Bis-C12, just like the commercial RNase-decontamination solution RNaseZap, results in an about 70 % reduction of RNase activity in comparison to the untreated RNase (positive control: Pos.).

### Example 9: Inactivation of collagenase by α Glu-C12 or γGlu-C12

Collagenase is an enzyme in the matrix metalloproteinase family that breaks down collagen, assisting in degradation of the extracellular matrix in mammals, a key step in the pathogenesis of bacteria.

### Measurement principle:

The activity of collagenases was measured by means of a fluorescence resonance energy transfer peptide library containing about 2.5 million peptides, with the sensitivity in the nanogram range for all known proteases. The change in fluorescence intensity in the emission/excitation ratio at 405/320 nm is directly proportional to the enzyme activity. For the testing of the inactivation of collagenase by *N*-(α-glutaminyl amido)-*N*'-n-dodecyl propane-1,3-diamine (α Glu-C12) or *N*-(γ-glutaminyl amido)-*N*'-n-dodecyl propane-1,3-diamine (γGlu-C12), a commercial substrate containing 2.5 million peptides was used (P-Check substrate, PANATecs, Germany). In the test process, 0.22 mg/ml collagenase (Sigma-Aldrich, Merck, Germany) was treated with 1.35 mM, 2.69 mM or 6.73 mM α Glu-C12 or γGlu-C12 in 50 mM MOPS buffer supplemented with 2 mM CaCl₂ (pH 7.0) and incubated for 15 minutes at 37 °C. A positive control, i.e. collagenase without the addition of α Glu-C12 or γGlu-C12 as well as a negative control were also carried out. To separate the α Glu-C12 or γGlu-C12 from the collagenase, the preparation was washed three times with 50 mM MOPS/2 mM CaCl₂ (pH 7.0; wash buffer) by centrifugation (400 x g) for 30 minutes on an Amicon^{®} Ultra-4* Centrifugal Filter Unit (10.000 NMWL) (Merck Millipore, Germany). Following the final washing step, 400 µl wash buffer was added to the αGlu-C12- or γGlu-C12 -free collagenase concentrate on the filter membrane. 90 µl of the concentrated both αGlu-C12- or γGlu-C12-treated and untreated collagenase was taken up with the aid of a pipette, transferred to a new vessel and mixed with 10 µl of P-Check substrate. Collagenase activity was determined by the detection of the change of fluorescence intensity (RFU) in a kinetic mode every 60 seconds for at least 30 minutes on a Cytation 5 Multi-Mode-Reader (BioTek, Germany).

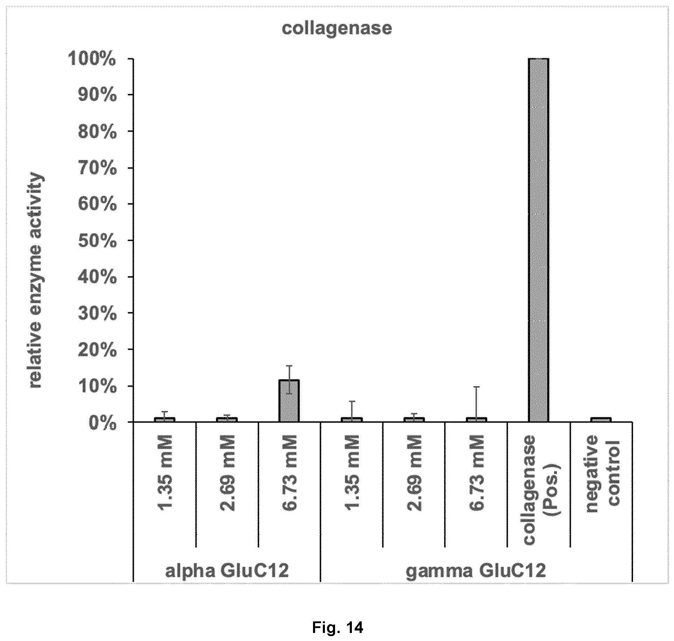

As can be seen from the results depicted in Fig. 14, concentrations up to 2.69 mM α Glu-C12 or 1.35 mM γGlu-C12 inactivate the collagenase completely.

### Example 10: Inactivation of collagenase by Oleyl-C12

Collagenase is an enzyme in the matrix metalloproteinase family that breaks down collagen, assisting in degradation of the extracellular matrix in mammals, a key step in the pathogenesis of bacteria.

### Measurement principle:

The activity of collagenases was measured by means of a fluorescence resonance energy transfer peptide library containing about 2.5 million peptides, with the sensitivity in the nanogram range for all known proteases. The change in fluorescence intensity in the emission/excitation ratio at 405/320 nm is directly proportional to the enzyme activity. For the testing of the inactivation of collagenase by N-oleyl-1,3-diamino propane (Oleyl-C12), a commercial substrate containing 2.5 million peptides was used (P-Check substrate, PANATecs, Germany). In the test process, 0.22 mg/ml collagenase (Sigma-Aldrich, Merck, Germany) was treated with 1.6 mM, 3.1 mM, 7.7 mM, 15.5 mM and 31 mM Oleyl-C12 in 50 mM MOPS buffer supplemented with 2 mM CaCl₂ (pH 7.0) and 5% DMSO and incubated for 15 minutes at 37 °C. A positive control, i.e. collagenase without the addition of α Glu-C12 or γGlu-C12 as well as a negative control were also carried out. 90 µl of the Oleyl-C12-treated and untreated collagenase was transferred to a new vessel and mixed with 10 µl of P-Check substrate. Collagenase activity was determined by the detection of the change of fluorescence intensity (RFU) in a kinetic mode every 60 seconds for at least 30 minutes on a Cytation 5 Multi-Mode-Reader (BioTek, Germany).

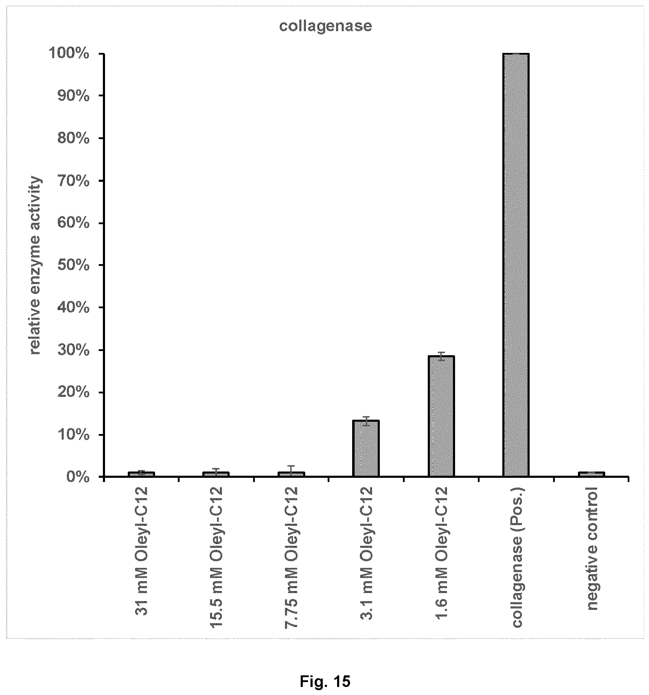

As can be seen from the results depicted in Fig. 15, concentrations up to 1.54 mM Oleyl-C12 inactivates the collagenase completely.

### Example 11: Inactivation of collagenase by C12, Bis-C12 and αGlu-C12 coupled to magnetic beads

### Coupling method:

N-dodecyl-1,3-diamino propane (C12), *N*'-(3-aminopropyl)-*N*'-n-dodecyl-1,3-diamino propane (Bis-C12) and *N*-(α-glutaminyl amido)-*N*'-n-dodecyl propane-1,3-diamine (αGlu-C12) was coupled to N-hydroxysuccinimide (NHS)-activated magnetic beads according to the information of the manufacturer (Pierce^{™} NHS-Activated Magnetic Beads; ThermoFisher Scientific). Therefore, 500 µM C12, 100 µM Bis-C12, 2.69 mM αGlu-C12 and 50 µl of NHS-activated magnetic beads were incubated for 2 hours at room temperature on a rotator. Also, a positive control was applied, incubating 1 M aminoethanol in 50 mM borate buffer (pH 8.5) with 50 µL of NHS-activated magnetic beads. During the first 30 minutes of incubation, the tubes were vortexed for 15 seconds every 5 minutes. For the remaining time, the tubes were vortexed for 15 seconds every 15 minutes. Afterwards, the beads were collected into a magnetic stand and washed with ultrapure water before they were quenched with 3 M aminoethanol (pH 9.0) for 2 hours at room temperature on a rotator. The beads were collected on a magnetic stand and washed with ultrapure water and 50 mM borate buffer (pH 9.0).

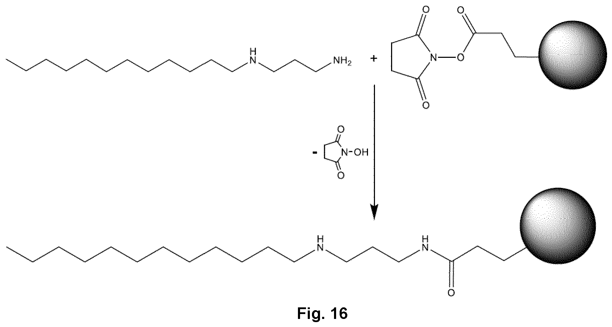

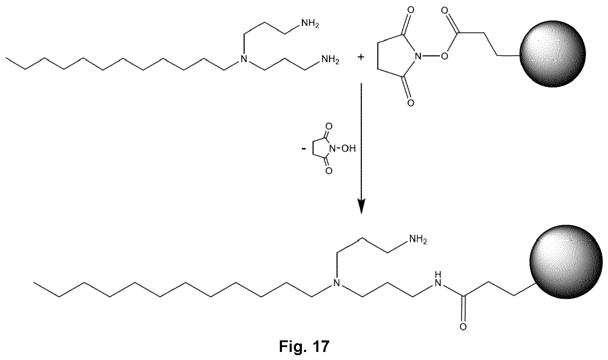

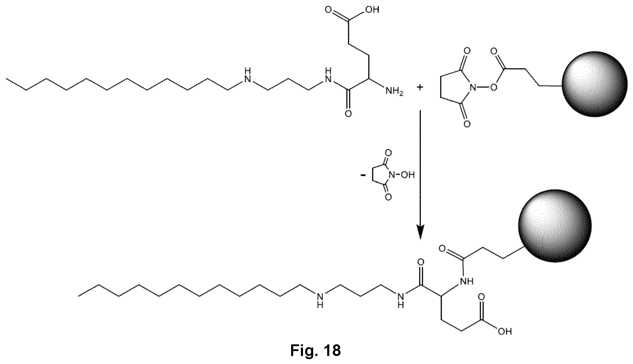

Fig. 16, 17 and 18 show the coupling experiment of C12, Bis-C12 and αGlu-C12 to NHS-activated carboxy groups on the surface of magnetic beads as an intermediate product of a linking agent coupled to a substrate. The grey-shaded circles represent the magnetic beads.

### Measurement principle:

For the testing of the inactivation of collagenase by coupled C12, Bis-C12 and αGlu-C12, a commercial template containing 2.5 million peptides was used (P-Check substrate, PANATecs, Germany). In the test process, 0.44 mg/ml collagenase (Sigma-Aldrich, Merck, Germany) was treated with C12-, Bis-C12- and αGlu-C12- coupled magnetic beads in 50 mM MOPS buffer supplemented with 2 mM CaCl₂ (pH 7.0) and incubated for 15 minutes at 37 °C. The beads were separated from the collagenase on a magnetic stand and washed with 100 µl MOPS buffer (pH 7.0). The supernatant containing the collagenase was transferred to a 96 well plate and mixed with 10 µl of P-Check substrate. A positive control, i.e. adding aminoethanol-coupled magnetic beads instead of diamine coupled magnetic beads to collagenase as well as a negative control were also carried out. Collagenase activity was determined by the detection of the change of fluorescence intensity (RFU) in a kinetic mode every 60 seconds for at least 30 minutes on a Cytation 5 Multi-Mode-Reader (BioTek, Germany).

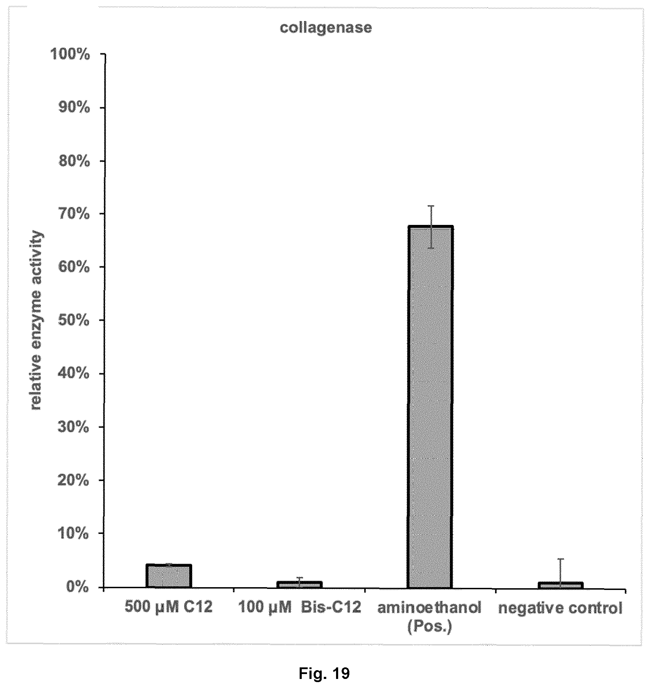

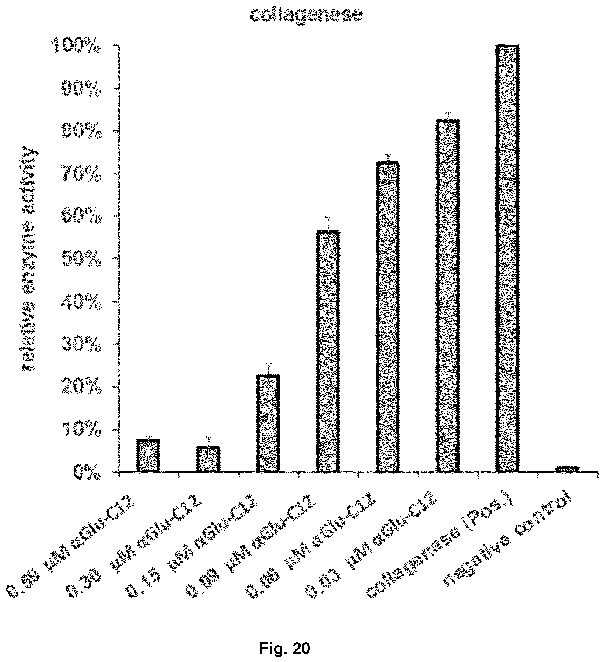

As can be seen from the results depicted in Fig. 19 and Fig. 20 500 µM C12, 100 µM Bis-C12 lead to an at least 80 % reduction and 0.30 µM αGlu-C12 lead to about 90% reduction of the collagenase activity.

### Example 12: Biocidal effects of C12 and Bis-C12 coupled to cellulose scaffolds

Cellulose sheets were coupled to *N*-dodecyl-1,3-diamino propane (C12) and *N*'-(3-aminopropyl)-*N*'-n-dodecyl-1,3-diamino propane (Bis-C12). The Malaprade reaction followed by reductive aldimine condensation was used for covalent binding of diamino propane derivatives. After reduction with cyanoborohydride followed by intensive washing steps, cellulose sheets were inoculated with a β-galactosidase-expressing *E. coli* strain.

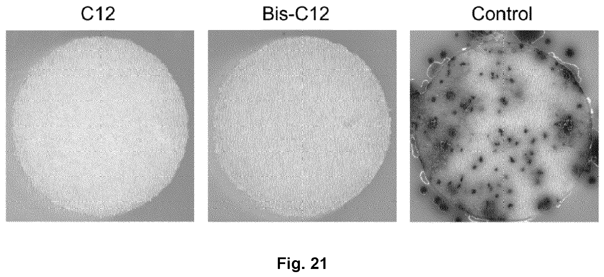

Fig. 21 shows that in contrast to the control, cellulose sheets coupled to C12 or Bis-C12 showed a pronounced biocidal activity.

In a first step, round sterile cellulose sheets were treated with sodium periodate (100 mM) for 1 h at room temperature, followed by intensive washing steps. Thereafter, samples were incubated with *N*-dodecyl-1,3-diamino propane (C12) and *N*'-(3-aminopropyl)-*N*'-n-dodecyl-1,3-diamino propane (Bis-C12), respectively, (5 mM), each for 20 h at 37 °C. As a control, the samples were treated with water. After incubation with sodium cyanoborohydride (4 mg/ml) in borate buffer (50 mM, pH 8.5) for 2 h at room temperature, samples were washed 5 times with water at 37 °C for 10 min each. Then, cellulose scaffolds were inoculated with a β-galactosidase-expressing *E. coli* strain and incubated at 37 °C for 2 days. The biocidal effect of the covalently bound sample with diamino propane derivatives is clearly visible. Blue coloured bacterial colonies appear only on the control sample.

### Example 13: Inactivation of cellulase by C12 and Bis-C12 coupled to cellulose scaffolds

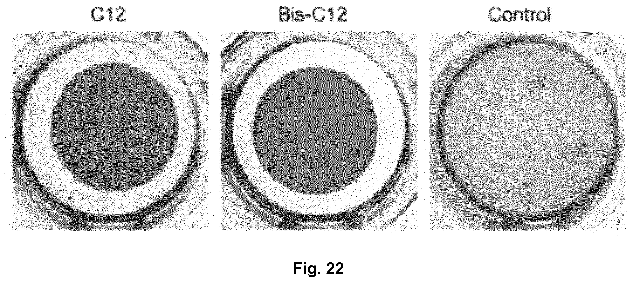

Cellulose sheets were covalently bound to *N*-dodecyl-1,3-diamino propane (C12) and *N*'-(3-aminopropyl)-*N*'-n-dodecyl-1,3-diamino propane (Bis-C12). Cyanuric chloride was used for covalent binding of C12 and Bis-C12. To evaluate the effect of a covalent bond, cellulose sheets were intensively washed and then incubated with the enzyme cellulase. In contrast to the control, cellulose sheets covalently bound to C12 or Bis-C12 were protected from cellulase digestion due to enzyme inhibition of C12 and Bis-C12 (Fig. 22).

Fig. 22 shows that cellulose scaffolds covalently bound to C12 and Bis-C12 inhibit cellulase activity and maintain the structural integrity. Round sterile cellulose sheets (8 mm in diameter) were incubated with the linking agent cyanuric chloride (5 % (w/v) in dioxane/xylene (w/w) 1:1) for 30 min at room temperature, followed by intensive washing steps. After drying, samples were incubated with C12 or Bis-C12 (1 % (w/v) each) for 20 h at 50 °C. The control was treated with water. Subsequently, samples were washed 5 times with water at 37 °C for 10 min each and incubated in cellulase solution (1 mg/ml in 50 mM citrate buffer pH 4.9) at 37 °C for 28 days. The data demonstrate that, in contrast to the cellulose sheets covalently bound to C12 or Bis-C12, the control scaffold was digested by the non-inhibited cellulase.

## Claims

1. Use of a diamine for interfering with the function and/or the structure of a polypeptide, wherein the diamine has the following formula (II) 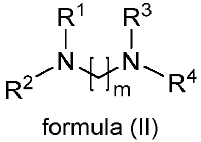 with
m being an integer from 1 to 3; and
R¹ being H;
R² being independently selected from an amino acid with the exception of pyroglutamic acid, and an organic acid;
R³ and R⁴ being independently selected from H, 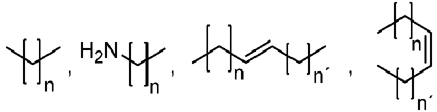 with n and n' being independently selected from an integer from 1 to 14.

2. The use of claim 1, wherein the polypeptide is a hormone, antibody, cytokine, enzyme, exotoxine, interferon, interleukin, chemokine, growth factor, colony stimulating factor, tumor necrosis factor, receptor, ribozyme, other disease-mediating enzymes in a targeted manner, collagen, keratin, elastin.

3. The use of claim 1, wherein the polypeptide is an enzyme and the enzyme is selected from an oxidoreductase, a hydrolase, a transferase or an isomerase.

4. The use of claim 3, wherein the enzyme is selected from a dioxygenase, an alcohol dehydrogenase, a peroxidase, a protease, or a nuclease.

5. The use of claim 3, wherein the enzyme is selected from a cyclooxygenase, alkali phosphatase, zymogene, serine protease, metalloproteases, collagenases, stromelysins, gelatinase, meprins, insulysin, CAAX-prenylproteases, aspartic peptidases, glutamylhydrolase, pryoglutamyl-peptidase, ubiquitinyl-hydrolase, oligopeptidase, an elastase, a carbohydrase, a driselase, a RNase and/or DNase.

6. The use of any of the preceding claims, wherein the diamine is one or at least one of *N*-dodecyl-1,3-diamino propane (C12), *N*'-(3-aminopropyl)-*N*'-dodecyl-1,3-diamino propane (Bis-C12), *N'*-oleyl-1,3-diamino propane (Oleyl-C12), *N*-(α-glutaminylamido)-*N*'-n-dodecyl-1,3-diamino propane (αGlu-C12), *N*-(γ-glutaminylamido)-*N'*-n-dodecyl-1,3-diamino propane (γGlu-C12).

7. The use of any of the preceding claims, wherein the diamine is coupled via a linker to a substrate or attached to a substrate.

8. The use of claim 7, wherein the linker is bound to the nitrogen atom(s) and/or to the substrate via a functional group derived from isothiocyanate (S=C=N-), isocyanate (O=C=N-), active ester (e.g. N-hydroxysuccinimide-active ester, perfluorophenyl active ester), halide (e.g. F⁻, Cl⁻, Br⁻, I⁻), nitrile (CN-), aryl sulfonyl halide, alkyl sulfonyl halide, aldehyde, ketone, dialdehyde, epoxide, di- and polydentate epoxy ether, halogenated N-heterocycle, aryl halide, alkyl halide, carboxylic acid ester, imidoester, carbodiimide, double or triple bond, hydroxyl, peroxide, carboxylate, carbonate, amine, anhydride, ester, ether, thiol or sulfonate.

9. The use of claim 7, wherein the substrate is selected from a polysaccharide, polyalcohol, magnetic beads, glass, ceramic, metal or textile.

10. The use of claim 9, wherein the substrate is a polysaccharide and the polysaccharide is cellulose.
